# EUROPEAN PATENT APPLICATION

(11) **EP 3 219 694 A1**
(43) Date of publication of application: **20.09.2017**
(21) Application number: 17161004.1
(22) Date of filing: 15.03.2017
(51) Int. Cl.: C04B 35/5831, C04B 35/626, C04B 35/63, C04B 35/645, C22C 26/00

(54) **COMPOSITE SINTERED BODY FOR CUTTING TOOL AND CUTTING TOOL USING THE SAME**

(30) Priority: 17.03.2016 KR 20160032372
(71) Applicant: Iljin Diamond Co., Ltd., Eumseong-gun, Chungcheongbuk-do 27659 (KR)
(72) Inventor: SHIN, Dongkyun, 27659 Chungcheongbuk-do (KR); PARK, Heesub, 27659 Chungcheongbuk-do (KR)
(74) Representative: Zech, Stefan Markus

(57) **Abstract**

Disclosed are a composite sintered body for a cutting tool, and a cutting tool using the same, and more particularly, to a composite sintered body for a cutting tool, which has excellent heat conductivity and electrical conductivity to be strong against abrasion by heat and impact and to be capable of minimizing an influence on an edge during an Electrical Discharge Machine (EDM) operation, and a cutting tool using the same.

## Description

### CROSS-REFERENCE TO RELATED APPLICATION

This application claims priority to and the benefit of Korean Patent Application No. 10-2016-0032372, filed on March 17, 2016, in the Korean Intellectual Property Office, the entire contents of which are incorporated herein by reference in their entirety.

### BACKGROUND

### 1. Field

The present invention relates to a composite sintered body for a cutting tool, and a cutting tool using the same, and more particularly, to a composite sintered body for a cutting tool, which has excellent heat conductivity and electrical conductivity to be strong against abrasion by heat and impact and to be capable of minimizing an influence on an edge during an Electrical Discharge Machine (EDM) operation, and a cutting tool using the same.

### 2. Description of the Related Art

According to an industrial development, demands for a precision cutting tool enabling economical machining are increased, and a tool processing technology is also rapidly developed. Among the precision cutting tool, there are synthetic diamond and a Cubit Boron Nitride (CBN) sintered body having the longest life as newest materials, but they are extremely hard materials, so that it is true that it is most difficult to process the materials.

The use of diamond and the CBN, which are super abrasives developed by the GE Company of USA, is rapidly generalized according to a trend of high precision of machining and an increase in diversity of a processing material according to the economic development. Particularly, since hardness of an abrasive grain is very high, the use of the diamond and the CBN occupies an exclusive position in precision processing of a high hardness material, such as hardened heat treated steel, hard metal, and ceramic, which is almost impossible to be processed by other machining including grinding processing by AlO and SiC grinding grains in the related art.

Among the super abrasives, diamond has severe grain abrasion according to a graphitization phenomenon during the processing of an iron-based material, so that the use of the diamond is restricted in grinding an iron-based material, but the CBN has a low chemical reaction affinity with an iron-based metal, unlike diamond, so that the CBN has excellent chemical stability and a high heat transfer rate during the grinding of an iron-based material, and thus the CBN is not easily worn out by grinding heat and a grinding wheel of the CBN is maintained well, thereby being widely used for processing an iron-based metal, such as high hardness heat treated steel, tool steel, and cast iron.

The CBN, which does not exist in the natural world and is a material generable by an artificial super high temperature and high pressure synthetic method, has hardness close to that of diamond, so that the CBN is used as an abrasive grain for an abrasion, grinding, and cutting material. A raw material of the CBN is a Hexagonal Boron Nitride (HBN), and the HBN has a similar crystalline structure to that of graphite that is a raw material of diamond, except for electrical conductivity, but is different from graphite in a synthetic condition and a selection of a catalyst.

In the meantime, the Polycrystalline Cubic Boron Nitride (PCBN) may be prepared by mixing the CBN together with a specific ceramic material as a binder and sintering the CBN and the ceramic material. Recently, a PCBN tool is also widely applied to a processed product of an abrasion difficult material, such as high hardness heat treated steel, a super heat resistant alloy, and sintered metal, and the PCBN tool, which is capable of super precisely processing a high hardness material, may be an alternative of a general grinding processing process.

However, the PCBN in the related art has a problem in that a tool is worn out during a cutting process or a tool is broken due to deterioration of heat resistance at a high temperature, thereby causing a problem in that a life of a tool is decreased.

Accordingly, in order to secure excellent life of a cutting tool including the PCBN, it is required to develop a cutting tool having excellent thermal stability and electrical conductivity so as to minimize abrasion by heat and damage by impact.

### SUMMARY OF THE INVENTION

The present disclosure has been made in an effort to solve the above-described problems associated with the prior art, and provides a composite sintered body for a cutting tool, which is formed of a mono complex having no direct bonding between Cubic Boron Nitride (CBN) grains and no heterogeneous bonding layer to have excellent thermal stability, and a cutting tool using the same.

The present disclosure has also been made in an effort to solve the above-described problems associated with the prior art, and provides a composite sintered body for a cutting tool, which is formed of a mono complex having no direct bonding between CBN grains and no heterogeneous bonding layer, thereby minimizing an influence on an edge during an Electrical Discharge Machine (EDM) operation, and a cutting tool using the same.

An exemplary embodiment of the present invention provides a composite sintered body for a cutting tool, the composite sintered body including a cubic boron nitride and a bonding agent, in which surface resistance of the composite sintered body is 1 × 10⁻⁵ Ω/cm² to 8 × 10⁻² Ω/cm², and heat conductivity of the composite sintered body is 40 to 80 W/mk at 25°C and 20 to 60 W/mk at 700°C.

A volume of the cubic boron nitride within the composite sintered body may be 65 to 85 vol%.

A grain size of the cubic boron nitride of the composite sintered body may be 0.01 to 1.5 µm.

A grain size of the cubic boron nitride of the composite sintered body may be 0.1 to 1.0 µm.

The bonding agent may be present as a carbide, a carbonitride, a boride, an oxide, and a solid solution including two or more of a Group 3 material, a Group 4 material, a Group 5 material, and Al, and a complex mixture of W and Co within the bonding agent may be contained by 0.1 to 8.0 wt%.

The sintered body of the cubic boron nitride may be manufactured by mixing by any one method of a ball mill method, an attritor mill method, and a planetary mill method.

The bonding agent may include titanium di-boride (TiB).

The composite sintered body may be formed of a mono complex having no direct bonding between grains of the carbon boron nitride and no heterogeneous bonding layer, and the bonding agent may be continuously connected.

Another exemplary embodiment of the present invention provides a cutting tool using a composite sintered body, the cutting tool being formed with an edge for processing, and being formed of a composite sintered body including a carbon boron nitride and a bonding agent, in which surface resistance of the composite sintered body is 1 × 10⁻⁵ Ω/cm² to 8 × 10⁻² Ω/cm², and heat conductivity of the composite sintered body is 40 to 80 W/mk at 25°C and 20 to 60 W/mk at 700°C.

The cutting tool may further include a cemented carbide substrate, and the composite sintered body may be provided at one side of the cemented carbide substrate.

The entire cutting tool may be formed of a sintered body.

The bonding agent may be present as a carbide, a carbonitride, a boride, an oxide, and a solid solution including two or more of a Group 3 material, a Group 4 material, a Group 5 material, and Al, and a complex mixture of W and Co within the bonding agent may be contained by 0.1 to 8.0 wt%.

The composite sintered body may be formed of a mono complex having no direct bonding between grains of the carbon boron nitride and no heterogeneous bonding layer, and the bonding agent may be continuously connected.

According to the present invention, it is possible to provide the composite sintered body for a cutting tool, which has excellent thermal stability minimizing damage by abrasion by heat and impact, and the cutting tool using the same by manufacturing the mono complex having no direct bonding between grains of a carbon boron nitride and having no heterogeneous bonding layer.

Further, according to the present invention, it is possible to minimize the direct bonding and a bunching phenomenon of the grains of the carbon boron nitride and minimizing an influence on an edge during an Electrical Discharge Machine (EDM) operation by manufacturing the mono complex having no direct bonding between grains of a carbon boron nitride and having no heterogeneous bonding layer.

### DETAILED DESCRIPTION OF THE INVENTION

Other detailed matters of the exemplary embodiments are included in the detailed description and the drawings.

Advantages and features of the present invention and methods accomplishing the advantages and features will become apparent from the following detailed description of exemplary embodiments with reference to the accompanying drawings. However, the present invention is not limited to exemplary embodiments disclosed below and may be implemented in various forms, and when one constituent element referred to as being "connected to" another constituent element, one constituent element can be directly coupled to or connected to the other constituent element, but intervening elements may also be present. Further, an irrelevant part to the present invention is omitted to clarify the description of the present invention, and like reference numerals designate like elements throughout the specification.

Hereinafter, the present invention will be described in detail with reference to the accompanying drawings.

Hereinafter, a composite sintered body for a cutting tool according to an exemplary embodiment of the present invention and a cutting tool using the same will be described in more detail.

### 1. Composite sintered body for a cutting tool

The present invention relates to a composite sintered body for a cutting tool and a cutting tool using the same, and provides a Cubic Boron Nitride (CBN) sintered boy usable as a cutting tool.

The composite sintered body of the present invention is a composite sintered body for a cutting tool, which is formed of a mono complex having no direct bonding between CBN grains and no heterogeneous bonding layer, and in which a bonding agent is continuously connected.

A sintered body in the related art is characterized in that a Polycrystalline Cubic Boron Nitride (PCBN) layer is laid on a WC substrate that is a metal plate and the PCBN layer and the WC substrate are sintered together, but the sintered body manufactured by the method in the related art has a heterogeneous bonding layer between the WC substrate and the PCBN layer, so that there may incur a separation phenomenon by a separation of the heterogeneous bonding layer during a cutting process. When the separation phenomenon is incurred by the separation of the heterogeneous bonding layer, brokenness of a tool is increased, thereby causing a problem in decreasing a life of the tool. The present invention provides the composite sintered body, which is formed of a mono complex body having no heterogeneous bonding layer to have high thermal stability, minimized brokenness of a tool by a separation phenomenon, and an excellent life, and a cutting tool using the same.

Titanium di-boride (TiB) is used as the bonding agent, and the titanium di-boride (TiB) is a secondary binder phase generated through a reaction in a titanium compound, and is generated by a reaction between the CBN and the bonding agent. The titanium di-boride (TiB) has a melting point of 3,200 °C or more, is a crystal having hardness of 25 to 35 GPa, which is very high, and has an excellent property. Further, the titanium di-boride (TiB) has heat conductivity of 60 to 120 W/mK and electrical conductivity of ∼ 105 S/cm, so that the titanium di-boride (TiB) is a material having an excellent characteristic as a material of a composite sintered body. It is preferable to use the titanium di-boride (TiB) as the bonding agent used in the present invention, but the kind of bonding agent is not essentially limited thereto, and the bonding agent may be selectively used by a method publicly known in the art. In the present invention, all of the bonding agents are connected, and the CBN is a matrix and there is no grain growth formed by a bonding of the CBNs. Further, the CBN inserted as the raw material of the composite sintered body may become smaller by breaking during mixing, but a size of a grain of the CBN is not further increased and the size of the grain when the CBN is inserted is maintained, thereby having no change in the size of the grain.

In the CBN sintered body usable as a tool in the present invention, a volume of the CBN within the sintered body is 65 to 85 vol%. When the volume of the CBN is less than 65 vol%, hardness of the composite sintered body is decreased, so that a life of the tool is decreased, and when the volume of the CBN exceeds 85 vol%, a possibility that the CBN grains are directly bonded, so that the CBN having the volume larger than 85 vol% is not preferable.

Further, in this case, a size of an average grain of the CBN may be preferably 0.01 to 1.5 µm, and more preferably, 0.1 to 1.0 µm. When a size of the grain of the CBN is less than 0.01 µm, bonding force between the CBN and the bonding agent is sharply decreased during the sintering. When the bonding force is decreased, hardness of the sintered body is decreased, and this causes a decrease in wear resistance, and as a result, a life of the tool is decreased. Accordingly, the CBN having the grain size of less than 0.01 µm is not preferable. Further, when the size of the grain of the CBN exceeds 1.5 µm, an occurrence rate of an internal deficit of the CBN is increased, so that there occurs a problem in that it is impossible to maintain good roughness of a workpiece material.

When the direct bonding between the grains of the CBN is increased, hardness is increased, but when impact is applied to the tool, a damage frequency is increased, so that a life of the tool is decreased. That is, when the direct bonding between the grains of the CBN is increased, the content of metal bonding agent assigning toughness is decreased and a gap between the grains of the CBN is decreased, so that hardness o the sintered body is increased. In general, when the content of CBN is increased, a contact portion between the grains of the CBN is increased, but a thickness of a ceramic binder portion, which is relatively vulnerable to impact resistance and has an excellent heat resistance characteristic, is decreased and hardness of the sintered body is generally increased and toughness of the sintered body is improved, but the heat resistance characteristic of the sintered body is degraded.

Further, in the composite sintered body including the CBN and the bonding agent according to the present invention, the bonding agent is present as a carbide, a carbonitride, a boride, an oxide, and a solid solution including two or more of a Group 3 material, a Group 4 material, a Group 5 material, and Al, and a complex mixture of W and Co within the bonding agent is contained by 0.1 to 8.0 wt%. The bonding agent component is present within the composite sintered body in a form of a mutual solid solution, a carbide, a carbonitride, a boride, an oxide, and a solid solution, so that the composite sintered body of the present invention may have appropriate electrical conductivity. The composite sintered body having appropriate electrical conductivity has an effect in increasing Electro Discharge Machine (EDM) discharging machinability to easily perform the cutting during a cutting process.

The cutting by the EDM may decrease tool processing cost, and may process a fine hole or recess to enable an accurate structure to be formed during the cutting, so that the cutting by the EDM is a processing method advantageous to many products.

Further, heat conductivity of the composite sintered body of the present invention is 40 to 80 W/mk at 25°C and 20 to 60 W/mk at 700°C.

In general, when the content of grains of the CBN is increased in the composite sintered body for the cutting tool, heat conductivity is increased, and thermal abrasion is generated in the entire tool by the increased heat conductivity, thereby decreasing a life of the tool. For example, when the content of CBN exceeds 85 vol%, heat conductivity is 80 to 150 W/mK at a room temperature of 25°C, and 70 to 100 W/mk at 700°C which is high, and when the heat conductivity is high as described above, the tool is vulnerable to thermal abrasion and a damage is generated to the tool during a high speed intermittent cutting. Accordingly, heat conductivity of the composite sintered body according to the present invention may be 40 to 80 W/mK at 25°C, and 20 to 60 W/mk at 700°C, and when heat conductivity at a room temperature is less than 400 W/mk, a cut portion of the PCBN sintered body is degraded to cause a local separation of the CBN, thereby increasing damage during the intermittent cutting. Further, when heat conductivity at a room temperature exceeds 80 W/mk, abrasion of the tool is rapidly progressed, so that damage may be generated during a high speed intermittent cutting.

Further, surface resistance of the composite sintered body according to the present invention is 1 × 10⁻⁵ Ω/cm² to 8 × 10⁻² Ω/cm². When surface resistance of the composite sintered body is less than 1 × 10⁻⁵ Ω/cm², the composite sintered body includes the nitride, the carbide, the boride, and the oxide with low ratios and includes a lot of metal materials, and a metal compound is increased, so that a life of the tool is decreased. Further, when surface resistance of the composite sintered body exceeds 8 × 10⁻² Ω/cm², the nitride, the carbide, the boride, and the oxide are increased, and bonding force between the CBN and the bonding agent is increased, so that performance of the tool may be increased, but a load may be generated during the electrical discharge cutting due to high resistance. The load generated by the high resistance during the electrical discharge cutting adds a load during the discharge within the sintered body, and this increases a possibility in generating a defect of the tool, so that the composite sintered body having surface resistance exceeding 8 × 10⁻² Ω/cm² is not preferable.

The grains of the CBN of the present invention and the bonding agent may be mixed with uniform powder by a general powder mixing method, such as a ball mill method, an attritor mill method, and a planetary mill method. The mixing of the grains of the CBN and the bonding agent may be performed by any one of the aforementioned methods, but the method of mixing the grains of the CBN and the bonding agent is not essentially limited thereto, and a method generally and publicly known in the art may be selectively used as the mixing method.

### 2. Cutting tool using composite sintered body

A cutting tool using a composite sintered body according to an exemplary embodiment of the present invention includes at least a part of a composite sintered body forming an edge for processing, and the composite sintered body including a CBN and a bonding agent is formed of a mono complex having no direct bonding between CBN grains and no heterogeneous bonding layer, and the bonding agent is continuously connected, and heat conductivity of the sintered body is 40 to 80 W/mK at 25°C, and 20 to 60 W/mK at 700°C. When heat conductivity is less than 400 W/mk, a cut portion of the PCBN sintered body is degraded to cause a local separation of the CBN, thereby increasing damage during the intermittent cutting. Further, when heat conductivity exceeds 80 W/mk, abrasion of the tool is rapidly progressed, so that damage may be generated during a high speed intermittent cutting.

In the composite sintered body according to the present invention, the CBN and the bonding agent formed between the CBN are present as carbides, carbonitrides, borides, oxides, and solid solutions including two or more of a Group 3 material, a Group 4 material, a Group 5 material, and Al. As described above, the CBN and the bonding agent component formed between the CBNs are present as the carbides, the carbonitrides, the borides, the oxides, and the solid solutions, so that the composite sintered body according to the present invention has electrical conductivity, and the composite sintered body having electrical conductivity improves discharge machinability during the EDM operation, thereby achieving easy cutting.

The cutting by the EDM may decrease processing cost of the high hardness composite sintered body, and may process a fine hole or recess to enable an accurate structure to be formed during the cutting, so that the cutting by the EDM is a processing method used in many products.

Further, surface resistance of the composite sintered body according to the present invention may be 1 × 10⁻⁵ Ω/cm² to 8 × 10⁻² Ω/cm². When surface resistance of the composite sintered body is less than 1 × 10⁻⁵ Ω/cm², the composite sintered body includes the nitride, the carbide, the boride, and the oxide with low ratios and includes a lot of metal materials, and a metal compound is increased, so that a life of the tool is decreased. Further, when surface resistance of the composite sintered body exceeds 8 × 10⁻² Ω/cm², the nitride, the carbide, the boride, and the oxide are increased, and bonding force between the CBN and the bonding agent is increased, so that performance of the tool may be increased, but a load may be generated during the electrical discharge cutting due to high resistance. The load generated by the high resistance during the electrical discharge cutting adds a load during the discharge within the sintered body, and this increases a possibility in generating a defect of the tool, so that the composite sintered body having surface resistance exceeding 8 × 10⁻² Ω/cm² is not preferable. Further, a cutting tool using a composite sintered body according to another exemplary embodiment of the present invention may be a cutting tool using a cemented carbide substrate and a composite sintered body provided at one side of the cemented carbide substrate, or a cutting tool using a composite sintered body, in which the entire cutting tool is formed of a sintered body.

Hereinafter, the present invention will be described based on examples in more detail.

### (Example 1) Evaluation of surface resistance of composite sintered body and tool life according to heat conductivity

In order to measure heat conductivity of a composite sintered body for a cutting tool according to an exemplary embodiment and a cutting tool using the same, and a life of the cutting tool, the test was performed as described below.

The CBN grains, of which an average size is 0.75 µm and an entire volume is 75 vol%, and a bonding agent of 30 vol% are mixed by using a general ball mill process. The bonding agent was mixed so as to be formed with a mixing ratio, in which a Ti compound of 80 wt%, an A1 compound of 18 wt%, and Ni of 2 wt% were mixed within the bonding agent, and paraffin wax was added about 1 wt%. During the ball mill process, a WC ball was used as a ball, and the mixing process was performed so that a ratio of additional mixing of the balls did not exceed 4 wt% of the entirety.

After the powder, which was completely mixed through the mixing process, was formed, in order to remove the residual wax, a de-waxing operation was performed at a temperature of 500°C or higher. Then, the formed article, of which a heat treatment was completed, was sealed in a metal cup, such as Ta, Mo, Nb, and Zr, and was assembled with an HPHT cell. The sintering was performed at a super high temperature and high pressure of 1,400 to 1,600°C and 5.5 to 6.0 GPa.

Surface resistance and heat conductivity of the sintering completed composite sintered body were measured, and an evaluation of a life of a tool was performed by manufacturing the composite sintered body into a tool and performing cutting. A workpiece used for the evaluation of a cutting test has a cylindrical shape, a length of 100 mm, and a diameter of 160 mm, and has four intermittent cutting blade portions, and intermittently cutting units are present with an interval of an angle of 90°. A pass of a tool life was limited based on tool abrasion, and the pass was limited by stopping the cutting when abrasion of an edge of the tool is 0.4 mm or more. The pass was determined after cutting the entire workpiece one time and then measuring abrasion of the edge of the tool. Further, heat conductivity was measured by using a sample having a diameter of 12 mm and a thickness of 2 mm and a standard measurement method of KS L 1604:2012 was used as a measurement method. A cutting test condition for evaluating a life of the tool is described below.

### <Cutting test condition>

Workpiece: SCM440
Type of tool: CNGA120408
Cutting condition: Cutting speed 200 m/min, Transfer speed F0.5 mm/rev, Cutting depth 0.05mm

Next, experiment conditions of the Examples of the present invention and the Comparative Example will be described.

In Example 1, a life of the tool when surface resistance of the composite sintered body is 2.2 × 10⁻³ Ω/cm², and heat conductivity at a room temperature is 60 W/mK is measured.

In Example 2, a life of the tool when surface resistance of the composite sintered body is 5.3 × 10⁻³ Ω/cm², and heat conductivity at a room temperature is 45 W/mK is measured.

In Comparative Example 1, a life of the tool when surface resistance of the composite sintered body is 2.0 × 10⁻³ Ω/cm², and heat conductivity at a room temperature is 130 W/mk is measured.

In Comparative Example 2, a life of the tool when surface resistance of the composite sintered body is 5.0 × 10⁻³ Ω/cm², and heat conductivity at a room temperature is 18.2 W/mk is measured.

In Comparative Example 3, a life of the tool when surface resistance of the composite sintered body is 9.0 × 10⁻² Ω/cm², and heat conductivity at a room temperature is 59 W/mk is measured.

Table 1 below represents measurement results of the life of the tool according to surface resistance and heat conductivity of Example 1, Example 2, and Comparative Examples 1 to 3.

**[Table 1]**

| Classification | Surface resistance (Ω/cm²) | Heat conductivity at room temperature (W/mK) | Life of tool (pass) |
|---|---|---|---|
| Example 1 | 2.2 × 10⁻³ | 60 | 10 |
| Example 2 | 5.3 × 10⁻³ | 45 | 9 |
| Comparative Example 1 | 2.0 × 10⁻³ | 130 | 3 |
| Comparative Example 2 | 5.0 × 10⁻³ | 18.2 | 2 |
| Comparative Example 3 | 9.0 × 10⁻² | 59 | 4 |

Referring to Table 1, in the case of Example 1, in which surface resistance and heat conductivity are 2.2 × 10⁻³ Ω/cm² and 60 W/mK, respectively, it can be seen that the life of the tool is 10 pass, which represents more excellent that those of Comparative Examples 1, 2, and 3. Further, even in the case of Example 2, in which surface resistance and heat conductivity are 5.3 × 10⁻³ Ω/cm² and 45 W/mK, respectively, it can be seen that the life of the tool is 9 pass, which represents more excellent that those of Comparative Examples 1, 2, and 3. Accordingly, it can be seen that, like Examples 1 and 2, when the surface resistance value and the heat conductivity value simultaneously satisfy the range of 1 × 10⁻⁵ Ω/cm² to 8 × 10⁻² Ω/cm², and the range of 40 to 80 W/mK at 25° and 20 to 60 W/mK at 700°, respectively, the life of the tool is excellent. When heat conductivity is high, thermal abrasion is generated in the entire tool and causes damage to the tool, resulting in degrading a life of the tool.

Referring to Table 1, it can be seen that in the case of Comparative Example 1, in which a value of heat conductivity is 130 W/mK which deviates from the range of the present invention, the life of the tool is 3 pass, which is low, and in the case of Comparative Example 2, in which the surface resistance value and the heat conductivity value are 5.0 × 10⁻³ Ω/cm² and 18 W/mK, respectively, all of which deviate from the ranges of the present invention, the life of the tool is 2 pass, which is much lower than those of Examples 1 and 2.

When heat conductivity of the composite sintered body is high, the tool is vulnerable to thermal abrasion, so that there is a problem in that the tool is damaged during a high speed intermittent cutting. Accordingly, in the case of Comparative Example 1, in which heat conductivity is high, the tool is vulnerable to thermal abrasion, which causes damage to the tool, resulting in decreasing the life of the tool. Further, when heat conductivity is low, the CBN may be locally separated by the degradation of the cut portion of the PCBN sintered body, thereby increasing damage during the intermittent cutting. Because of this, the life of the tool in Comparative Example 2, in which heat conductivity at a room temperature is low, is measured as 2 pass which is low.

Further, in the case of Comparative Example 3, in which the surface resistance value is 9.0 × 10⁻² Ω/cm² and the heat conductivity value at a room temperature is 59 W/mK, respectively, and the life of the tool is represented as 4 pass which is higher than those of Comparative Examples 1 and 2, but which is much lower than those of Examples 1 and 2. When a surface resistance value of the composite sintered body exceeds 8 × 10⁻² Ω/cm² like Comparative Example 3, a nitride, a carbide, a boride, and an oxide are increased, and bonding force between the CBN and the bonding agent is increased, so that performance of the tool may be increased, but a load may be generated during the electrical discharge cutting due to high resistance. The load generated by the high resistance during the electrical discharge cutting adds a load during the discharge within the sintered body, and the added load causes a defect of the tool, so that it is determined that the life of the tool of Comparative Example 3 is degraded.

### (Example 2) Evaluation of life of tool according to volume of composite sintered body and existence of heterogeneous bonding layer

In order to evaluate a life of the tool according to a volume of a composite sintered body for a cutting tool according to an exemplary embodiment and a cutting tool using the same, and existence of a heterogeneous boning layer, the test was performed as described below.

In the test of the life of the tool of the present Examples, the composite sintered bodies were manufactured with different volumes of the sintered bodies inserted when the composite sintered bodies are manufactured, and further, in the Comparative Examples, the evaluation of a life of the tool was performed by manufacturing the composite sintered body manufactured by bonding the composite sintered body and a WC layer so that a heterogeneous bonding layer exists was manufactured as a tool and performing cutting. A workpiece used for the evaluation of a cutting test has a cylindrical shape, a length of 100 mm, and a diameter of 160 mm, and has two intermittent blade portions, and intermittently cutting units are present with an interval of an angle of 180°, and a cutting test condition for measuring a life of the tool is described below.

### <Cutting test condition>

Workpiece: SKD 11
Type of tool: CNGA120408
Cutting condition: Cutting speed 200m/min, Transfer speed F0.5mm/rev, Cutting depth 0.05mm

Next, experiment conditions of the Examples of the present invention and the Comparative Example will be described.

In Example 3, a life of the tool was measured in the case where an average grain size of the CBN of the composite sintered body is 0.75 µm, a volume of the composite sintered body is 65 vol%, heat conductivity at a room temperature of the composite sintered body is 50 W/mK, and the composite sintered body is formed of a mono complex body having no heterogeneous boding layer.

In Example 4, a life of the tool was measured in the case where an average grain size of the CBN of the composite sintered body is 0.75 µm, a volume of the composite sintered body is 80 vol%, heat conductivity at a room temperature of the composite sintered body is 65 W/mK, and the composite sintered body is formed of a mono complex body having no heterogeneous boding layer.

In Comparative Example 3, a life of the tool was measured in the case where an average grain size of the CBN of the composite sintered body is 0.75 µm, a volume of the composite sintered body is 65 vol%, heat conductivity at a room temperature of the composite sintered body is 50 W/mK, and a heterogeneous boding layer exists.

In Example 4, a life of the tool was measured in the case where an average grain size of the CBN of the composite sintered body is 0.75 µm, a volume of the composite sintered body is 95 vol%, heat conductivity at a room temperature of the composite sintered body is 130 W/mK, and the composite sintered body is formed of a mono complex body having no heterogeneous boding layer.

In Example 5, a life of the tool was measured in the case where an average grain size of the CBN of the composite sintered body is 3.0 µm, a volume of the composite sintered body is 70 vol%, and the composite sintered body is formed of a mono complex body having no heterogeneous boding layer.

Table 2 below represents measurement results of the life of the tool according to the volume and the existence of the heterogeneous bonding layer of Example 3, Example 4, and Comparative Examples 3 to 5.

**[Table 2]**

| Classification | Grain size of CBN (µm) | Volume (vol%) | Heat conductivity at room temperature (W/mK) | Existence of heterogeneous bonding layer (existence/non-existence) | Life of tool (pass) |
|---|---|---|---|---|---|
| Example 3 | 0.75 | 65 | 50 | Non-existence | 11 |
| Example 4 | 0.75 | 80 | 65 | Non-existence | 12 |
| Comparative Example 3 | 0.75 | 65 | 50 | Existence | 6 |
| Comparative Example 4 | 0.75 | 95 | 130 | Non-existence | 4 |
| Comparative Example 5 | 3.0 | 70 | 55 | Non-existence | 7 |

Referring to Table 2, in the case of Example 3, in which an average grain size of the CBN of the composite sintered body is 0.75 µm, a volume of the composite sintered body is 65 vol%, heat conductivity at a room temperature of the composite sintered body is 50 W/mK, and the composite sintered body is formed of a mono complex body having no heterogeneous boding layer, the life of the tool is 11 pass, which is excellent, and in the case of Example 4, in which an average grain size of the CBN of the composite sintered body is 0.75 µm, a volume of the composite sintered body is 80 vol%, heat conductivity at a room temperature of the composite sintered body is 65 W/mK, and the composite sintered body is formed of a mono complex body having no heterogeneous boding layer, the life of the tool is 12 pass, which is excellent.

However, in the case of Comparative Example 3, in which an average grain size of the CBN of the composite sintered body is 0.75 µm, a volume of the composite sintered body is 65 vol%, heat conductivity at a room temperature of the composite sintered body is 50 W/mK, and a heterogeneous boding layer exists, the life of the tool is 6 pass, which is low. In general, the composite sintered body is characterized in being manufactured by putting a PCBN layer on a WC substrate that is a metal plate and sintering the WC plate and the PCBN layer together, but the sintered body manufactured by the aforementioned method has the heterogeneous bonding layer between the WC substrate and the PCBN layer like Comparative Example 3. In the composite sintered body including the heterogeneous bonding layer like Comparative Example 3, a separation phenomenon by a separation of the heterogeneous bonding layer may be generated during the cutting process, and when the separation phenomenon by the separation of the heterogeneous bonding layer is generated, brokenness of the tool is increased to decrease a life of the tool. Accordingly, since the tool is damaged by the separation phenomenon by the separation of the heterogeneous bonding layer during the cutting process, the life of the tool of Comparative Example 3 is short.

Further, even in Comparative Example 4, in which the composite sintered body is formed of the mono complex body having no heterogeneous boding layer, but the volume of the composite sintered body is 95 vol%, the life of the tool is 4 pass, which is low. When the volume of the composite sintered body exceeds 85 vol%, hardness is increased, thermal stability is decreased, and a possibility of a direct bonding between the grains of the CBN is increased to decrease the life of the tool, so that the composite sintered body having the volume exceeding 85 vol% is not preferable. When the direct bonding between the grains of the CBN is increased, hardness is increased, but brittleness is increased to generate a problem in decreasing a life of the tool, so that in the present invention, the volume of the composite sintered body is limited to the range of 65 to 85 vol%. In Comparative Example 4, the volume of the composite sintered body is high and brittleness is increased, so that the life of the tool is measured to be low during the cutting process.

Further, in Comparative Example 5, in which an average grain size of the CBN of the composite sintered body is 3.0 µm, a volume of the composite sintered body is 70 vol%, and a heterogeneous boding layer does not exist, the life of the tool was measured to be 7 pass which is low. Like Comparative Example 5, when the grain size of the CBN is increased to 3 µm, brittleness is increased similar to the increase in the volume, so that the life of the tool is decreased by damage. Accordingly, the grain size of the CBN of the sintered body is appropriately 0.01 to 1.5 µm, and more preferably, 0.1 to 1.0 µm.

It will be appreciated by those skilled in the art that the present invention as described above may be implemented into other specific forms without departing from the technical spirit thereof or essential characteristics. Thus, it is to be appreciated that the exemplary embodiments described above are intended to be illustrative in every sense, and not restrictive. The scope of the present invention is represented by the claims to be described below rather than the detailed description, and it is to be interpreted that the meaning and scope of the claims and all the changes or modified forms derived from the equivalents thereof come within the scope of the present invention.

## Claims

1. A composite sintered body for a cutting tool, the composite sintered body including a cubic boron nitride and a bonding agent,
wherein surface resistance of the composite sintered body is 1 × 10⁻⁵ Ω/cm² to 8 × 10⁻² Ω/cm², and heat conductivity of the composite sintered body is 40 to 80 W/mk at 25°C and 20 to 60 W/mk at 700°C.

2. The composite sintered body of claim 1, wherein a volume of the cubic boron nitride within the composite sintered body is 65 to 85 vol%.

3. The composite sintered body of claim 1, wherein a grain size of the cubic boron nitride of the composite sintered body is 0.01 to 1.5 µm.

4. The composite sintered body of claim 3, wherein a grain size of the cubic boron nitride of the composite sintered body is 0.1 to 1.0 µm.

5. The composite sintered body of claim 1, wherein the bonding agent is present as a carbide, a carbonitride, a boride, an oxide, and a solid solution including two or more of a Group 3 material, a Group 4 material, a Group 5 material, and Al, and a complex mixture of W and Co within the bonding agent is contained by 0.1 to 8.0 wt%.

6. The composite sintered body of claim 1, wherein the sintered body of the cubic boron nitride is manufactured by mixing by any one method of a ball mill method, an attritor mill method, and a planetary mill method.

7. The composite sintered body of claim 1, wherein the bonding agent includes titanium di-boride (TiB).

8. The composite sintered body of claim 1, wherein the composite sintered body is formed of a mono complex having no direct bonding between grains of the carbon boron nitride and no heterogeneous bonding layer, and the bonding agent is continuously connected.

9. A cutting tool using a composite sintered body, the cutting tool being formed with an edge for processing, and being formed of a composite sintered body including a carbon boron nitride and a bonding agent,
wherein surface resistance of the composite sintered body is 1 × 10⁻⁵ Ω/cm² to 8 × 10⁻² Ω/cm², and heat conductivity of the composite sintered body is 40 to 80 W/mk at 25°C and 20 to 60 W/mk at 700°C.

10. The cutting tool of claim 9, further comprising:
a cemented carbide substrate,
wherein the composite sintered body is provided at one side of the cemented carbide substrate.

11. The cutting tool of claim 9, wherein the entire cutting tool is formed of a sintered body.

12. The cutting tool of claim 9, wherein the bonding agent is present as a carbide, a carbonitride, a boride, an oxide, and a solid solution including two or more of a Group 3 material, a Group 4 material, a Group 5 material, and Al, and a complex mixture of W and Co within the bonding agent is contained by 0.1 to 8.0 wt%.

13. The cutting tool of claim 9, wherein the composite sintered body is formed of a mono complex having no direct bonding between grains of the carbon boron nitride and no heterogeneous bonding layer, and the bonding agent is continuously connected.
